# EUROPEAN PATENT APPLICATION

(11) **EP 2 017 512 A1**
(43) Date of publication of application: **21.01.2009**
(21) Application number: 07111912.7
(22) Date of filing: 06.07.2007
(51) Int. Cl.: F16K 31/04

(54) **Setting of cam for valve**

(71) Applicant: Esbe AB, 330 21 Reftele (SE)
(72) Inventor: Kårhammar, Martin, 330 12 Forsheda (SE); Tagesson, Leif, 330 21 Reftele (SE)
(74) Representative: Andersson, Per-Olof

(57) **Abstract**

An actuator device is intended to be connected to a mixing valve (2) via a valve stem (3) for controlling a valve mixing ratio by rotating the stem (3) around its centre axis and to operate a switch (4) included in said device. The actuator device comprises a housing (5) accommodating a motor (6). The housing further accommodates a stem rotating means (7), coupled to the motor (6) to be rotated thereby and intended to be coaxially, non-rotatably connected to the stem (3), an indicating member (8), which in a mounted position is non-rotatably connected to the stem rotating means (7), for indicating the rotational position of the stem (3), the housing (5) having an opening (9) allowing reading of the rotational position of the indicating member (8), and a cam member (10), which is mounted on the stem rotating means (7) and intended to operate the switch (4). The cam member (10) is arranged on the stem rotating means (7) such that it is accessible via said opening (9), when the indicating member (8) is in a cam access position, for manual setting in an desired angle position.

## Description

### Technical field of the invention

Present application concerns an actuator device, intended to be connected to a mixing valve via a valve stem for controlling the valve mixing ratio by rotating the stem around its centre axis and to operate a switch included in said device, comprising a housing accommodating a motor, a stem rotating means, coupled to the motor to be rotated thereby and intended to be coaxially, non-rotatably connected to the stem, an indicating member, which in a mounted mode is non-rotatably connected to the stem rotating means, for indicating the rotational position of the stem, the housing having an opening allowing reading of the rotational position of the indicating member, and a cam member, which is mounted on the stem rotating means, and intended to operate the switch.

### Background art

An actuator device of the above mentioned type is a dual function actuator controlling on one hand a mixing valve and on the other an external device, such as a pump, an additional heating system, a fan or an indicating lamp.

The actuator is provided with fixed cams actuating limit switches allowing the valve stem only to rotate within a fixed working range. This working range is determined by the valve manufacturer and set in the factory.

The actuator is further provided with an additional cam actuating an auxiliary switch for controlling the external device. The setting of the auxiliary switch working range is done by the customer and depends on the device to be controlled. In order to change the angle position of the additional cam it is necessary to disassemble the housing, exposing the interior parts, such as the cams and the motor, set the cam, and then reassemble the housing. Apart from being time consuming the setting further entails the risk of accidentally effecting the cams for the limit switches or other parts in the actuator, which in turn could lead to incorrect operation of the valve.

It is further not possible to control whether the chosen angle position of the cam is correct.

Hence, the object of the invention is to provide an actuator device with an auxiliary switch wherein it is possible to set the auxiliary switch working range in a simple and tamperproof way without any tools.

A further object of the invention to provide an actuator device in which it is possible to simulate the cam movement and control the cam position without disassembling the housing.

### Summary of the invention

These objects are achieved by means of an actuator device of the by way of introduction mentioned type, which is characterised in that cam member is arranged on the stem rotating means such that it is accessible via said opening, when the indicating member is in a cam access position, for manual setting in an desired angle position. For making the cam easily accessible the whole indicating member is preferably axially removable from the opening to its cam access position, though it is also possible to design the indicating member with a openable lid.

Advantageously, the stem rotating means comprises a first part, coupled to the motor, and a second part, intended to be mounted to the valve stem, wherein the first and the second parts are non-rotatably connected to each other by means of the indicating member when it is in its mounted position, and wherein the first and the second parts are rotatable in relation to each other when the indicating member is in its cam access position. In this way the motor is disengaged from the valve stem during setting of the cam.

The indicating member preferably has an disconnected position, in which the first and the second parts are rotatable in relation to each other and the second part is non-rotatably connected to the indicating member. The valve stem is manually rotatable by means of the indicating member when it is in its disconnected position, in which it is disconnected from the first part of the stem rotating means and connected to the second part of the stem rotating means. This provides for a simulation mode for the actuator device.

The cam member is preferably a ring provided with a cam, wherein the ring is frictionally fitted on the second part, hence rotatable in relation to the second part. The frictional fitting provides for a stepless setting of the cam.

Preferably the second part of the stem rotating means has a top plate which is accessible via the opening when the indicating member is in its cam access position and which has a slot through which a setting pin on the cam member is extending and wherein the cam member is rotatable in relation to the second part by means of the setting pin. Instead of a setting pin the cam member might be provided with a setting recess in which a peg could be inserted for displacing the ring.

### Brief Description of the Drawings

The invention will now be described in more detail by means of a preferred but non-limiting embodiment and with reference to the accompanying drawings.
Fig 1 is a perspective view showing a housing of an actuator device with an indicating member in a cam access position and a mixing valve, to which the actuator device shall be connected.
Fig 2 is an exploded view showing the actuator device in fig 1.
Fig 3 is a partly exploded view showing a first part of the stem rotating means mounted in the housing and a cam member fitted on a second part of the stem rotating means.
Fig 4 is a perspective view showing the stem rotating means with the indicating member in a mounted position.
Fig 5 is a perspective view showing the stem rotating means with the indicating member in an disconnected position.

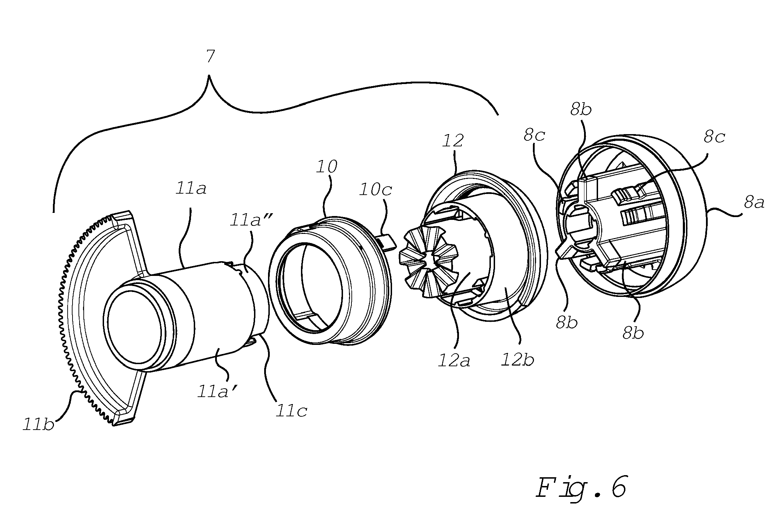

Fig 6 is an exploded view showing stem rotating means and the indicating member.
Fig 7 is a plan view showing the stem rotating means with the cam member and an auxiliary switch.

### Description of a Preferred Embodiment

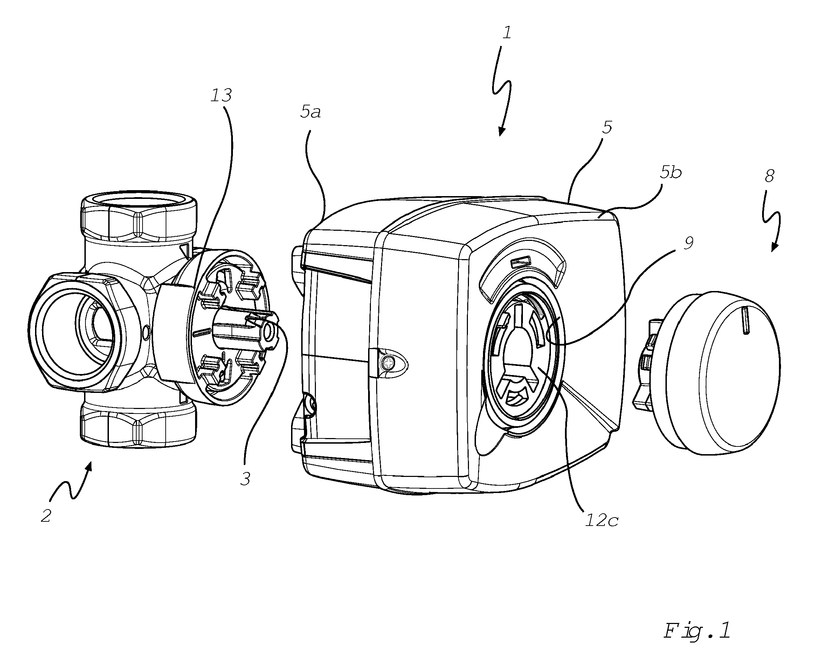

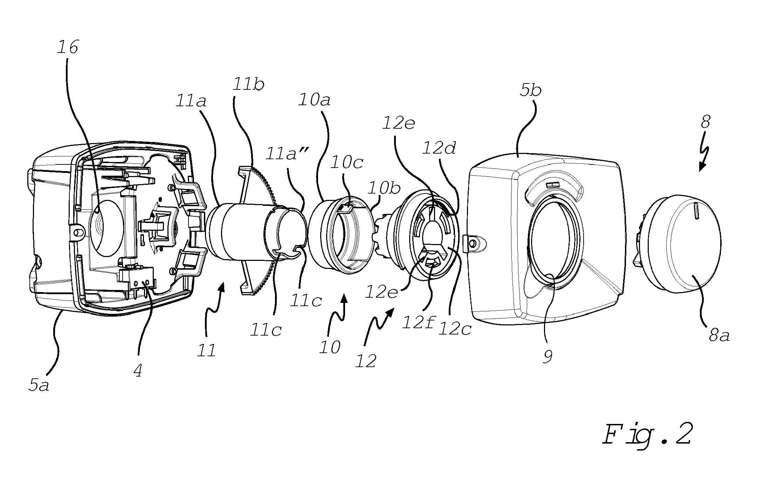

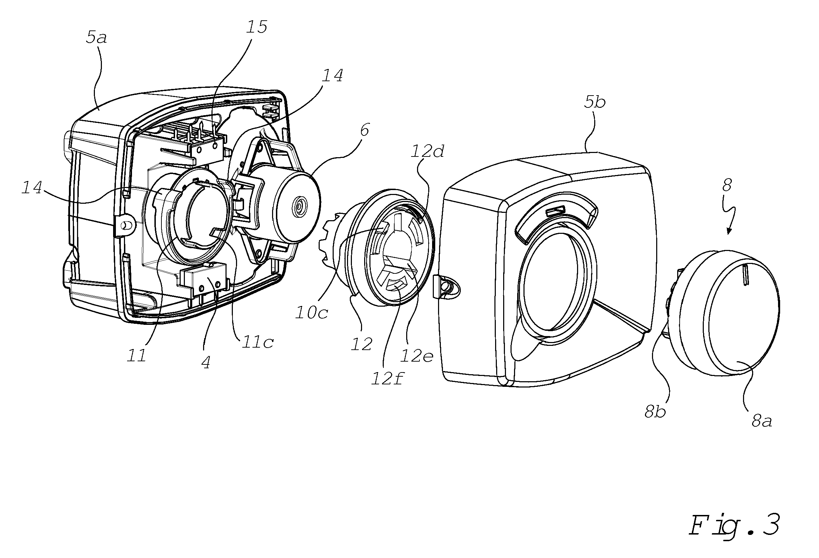

In fig 1-3 is shown an actuator 1 according the invention. The actuator 1 is intended to be connected to a valve stem 3 on a rotary mixing valve 2 for regulating the valve mixing ratio by rotating the stem 3 around its centre axis.

The actuator 1 comprises a housing 5 with a rear part 5a and a front part 5b. The rear part 5a is mounted on a valve plate 13 and has an opening 16 in which the valve stem 3 is inserted. The front part 5b has above the rear part opening a corresponding opening 9 in which an indicating member 8 indicating the rotational position of the valve stem 3 is inserted.

The actuator 1 can by means of the indicating member 8 be set in three different modes.

First, a setting mode, shown in fig 1, in which the indicating member 8 is removed from the housing 5 to a cam access position and in which setting of a cam 10b is possible.

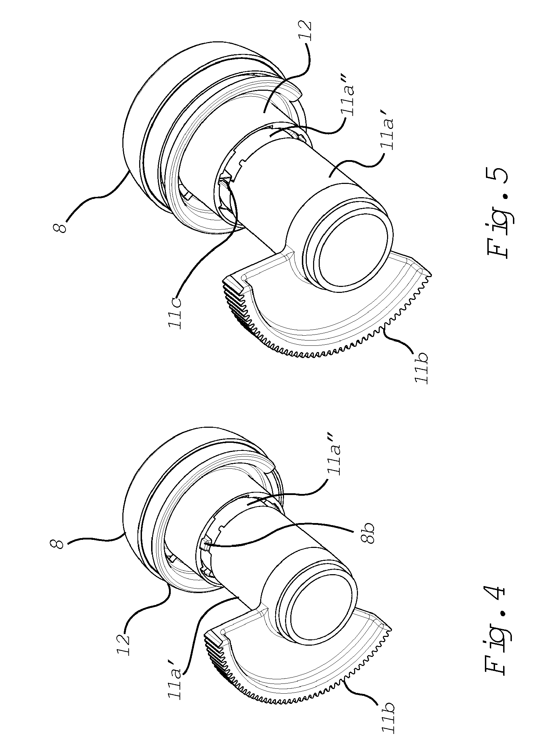

Second, a simulating mode, shown in fig 5 without the housing, in which the indicating member 8 is axially displaced to an disconnected position and in which simulation of the set position of the cam 10b is possible.

Third, a operating mode, shown in fig 4 without the housing, in which the indicating member 8 is pushed into a mounted position and which corresponds normal operation of the actuator 1.

There is no need of tools and the front part 5b of the housing 5 need not be removed when switching between the modes, it is simply to remove the indicating member 8 from the opening 9 in the housing 5.

The housing accommodates a motor 6, a stem rotating means 7, part of the indicating member 8, two fixed cams 14 actuating two limit switches 15 and an auxiliary cam 10b for actuating an auxiliary switch 4. In operation the motor 6 is driven in response to a temperature sensed by sensors (not shown). The motor 6 is mounted on the rear part 5a.

The stem rotating means 7 comprises two parts 11, 12, coaxially arranged and non-rotatably connected to each other by means of the indicating member 8 in its mounted position. The first part 11 is a sleeve element 11a with a gear segment 11b meshing with a corresponding gear segment (not shown) on the motor 6. Hence the rotation of the motor 6 is directly transmitted to the sleeve element 11a. The sleeve element 11a is mounted on the rear part 5a above the rear part opening such that it is coaxial with the valve stem 3. The sleeve element comprises an outer sleeve element 11 a' and a taller inner sleeve element 11 a".

The two fixed cams 14 are non-rotatable attached to the outer sleeve element 11a' for actuating the two limit switches 15 mounted at the side of the sleeve element. The purpose of the fixed cams 14 is to prevent the valve stem rotating beyond its working range defined by the maximum allowed rotation of the valve body. Hence, these cams are factory set and are not to be changed.

On the opposite side of the sleeve element 11a in relation to the limit switches is mounted an auxiliary switch 4 which is actuated by the auxiliary cam 10b, which will be described in more detail below. The auxiliary switch 4 is intended to control an external device, for example for switching on/off additional pumps, additional heating elements, lights, indicator elements, etc.

The second part of the stem rotating means 7 is a stem coupler 12 which is non-rotatably mounted on the stem 3. The stem coupler 12 essentially has the form of two cylinders 12a, 12b with different diameters coaxially arranged and connected at one end via a top plate 12c. The top plate diameter is larger than the larger cylinder diameter. The smaller diameter cylinder 12a is taller than the larger diameter cylinder 12b and has at the end projecting below the larger diameter cylinder a crenellated form for non-rotatable attachment on a correspondingly crenellated adapter means (not shown) threaded on the valve stem. The stem coupler 12 is attached to the valve stem by means of a screw in a screw hole in the center of said end.

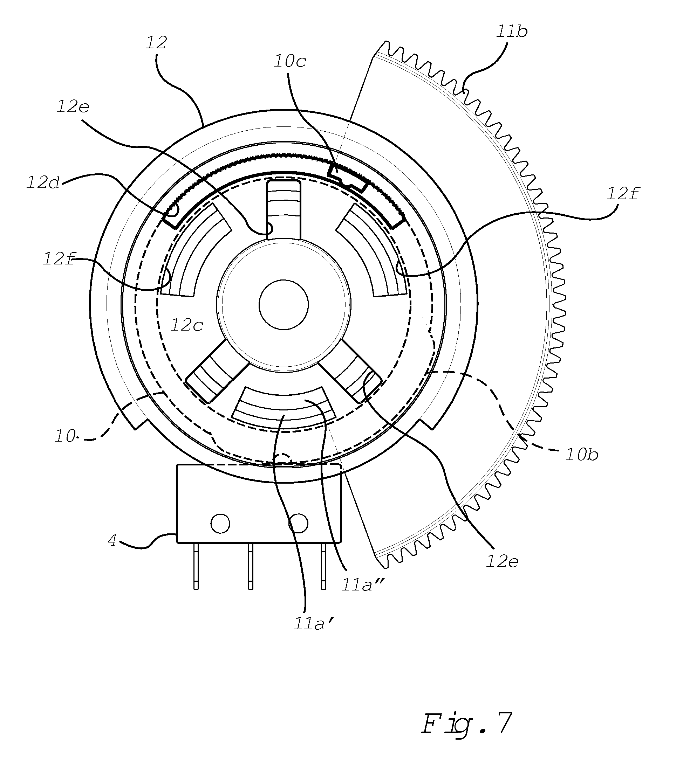

The auxiliary cam 10b is integral with a ring 10a forming a cam member 10, fitted on the larger diameter cylinder with a frictional grip. The cam member 10 is shown in fig 7 with broken lines. The cam 10b is intended to actuate the auxiliary switch 4. The top plate 12c has a setting slot 12d in form of a circular arc on the outer periphery. A setting pin 10c on the ring 10a is extending through the setting slot. Surfaces on the setting pin and the slot wall, bearing against each other, are provided with micro-ribs for improving the frictional grip.

The indicating member 8 comprises a knob 8a having on one side a mark indicating the rotational position of the valve stem and on the opposite side guide pins 8b and guide springs 8c by which the indicating member 8 connects the stem coupler 12 with the sleeve element 11.

The guide pins 8b and the guide springs 8c are inserted in corresponding slots 12e, 12f in the top plate 12c of the stem coupler 12.

The guide pins 8b are inserted in three guide slots 12e, asymmetrically radially arranged in the top plate 12c, between the larger diameter cylinder 12b and the smaller diameter cylinder 12a. Each slot continues in the smaller diameter cylinder wall forming a slit in this wall having the same length as the larger diameter cylinder. The asymmetrical arrangement ensures a correct insertion of the indicating member in the stem coupler in relation to the valve stem.

The guide pins 8b have such a length that they when the indicating member 8 is in the mounted position are projecting beyond the larger diameter cylinder 12b and are inserted in recesses 11c arranged on the free edge of the inner sleeve element 11a" as is shown in fig 4. This position corresponds the mounted position of the indicating member 8.

The guide springs 8c are inserted in three additional guide slots 12f, arranged in the top plate 12a, wherein each additional guide slot is arranged between two adjacent guide slots and has the form of a circular arc.

When inserted the guide springs pushes against the inner wall of the larger diameter cylinder, thus radially clamping the indicating member against the stem coupler.

In mounted position the indicating member 8 is non-rotatably connected to the sleeve element 11 a by engaging with its guide pins 8b in the sleeve element recesses 11c on the inner sleeve element 11a". In this position the indicating member 8 connects the stem coupler 12 to the sleeve element 11a and thereby the valve stem 3 to the motor 6. This represents the normal operating mode of the actuator.

When the indicating member 8 is axially displaced such that the guide pins 8b no longer engage the recesses 11c in the sleeve element it reaches its disconnected position and there is no longer any connection between the sleeve element 11a and the stem coupler 12 but the indicating member 8 is still connected to the stem coupler 12. Hence the rotation of the motor 6 is not transmitted to the valve stem 3 but rotation of the indicating member 8 rotates the stem coupler 12 and thereby the valve stem 3. The indicating member 8 in its disconnected position is kept in place by the guide springs 8c clamping it in its axial position.

When the indicating member 8 is in its disconnected position the actuator is in the simulation mode. In this mode it is possible to control the angle position of the auxiliary cam 10b in relation to the auxiliary switch 4. By manually rotating the indicating member 8 an audible indicator in form of the sound of starting or stopping of the external device or a clicking sound when the auxiliary cam touches the auxiliary switch 4 gives an indication of whether the auxiliary cam 10b is in correct angle position. If not, the indicating member 8 is axially removed to its cam access position and the actuator 1 brought to its setting mode.

In the setting mode the indicating member 8 is removed from the housing 5 uncovering the top plate 12c of the stem coupler 12. The setting pin 10c on the cam member 10 is accessible and manually displaceable in the setting slot 12d in the top plate 12c to a desired angle position.

The slot length determines the maximum allowed displacement as is shown in fig 7. Displacing the setting pin 10c will displace the cam 10b correspondingly and the auxiliary switch 4 will be actuated in another rotational position of the sleeve element 11a as transmitted by the motor.

By manually displacing the setting pin 10c in the slot 12d during setting mode the cam is displaced in relation to the stem coupler 12, hence the working range for the auxiliary switch 4 is changed. The length of the slot corresponds the possible working range setting.

The stem coupler 12 further has a flange and the front part of the housing has corresponding stop lugs for keeping the rotation of the stem within allowed angles.

The actuator device according the invention has been described in a preferred embodiment for illustrative purposes only, and it is to be understood that changes and variations may be made without departing from the spirit or scope of the following claims.

## Claims

1. Actuator device, intended to be connected to a mixing valve (2) via a valve stem (3) for controlling a valve mixing ratio by rotating the stem (3) around its centre axis and to operate a switch (4) included in said device, wherein the actuator device comprises a housing (5) accommodating
a motor (6),
a stem rotating means (7), coupled to the motor (6) to be rotated thereby and intended to be coaxially, non-rotatably connected to the stem (3),
an indicating member (8), which in a mounted position is non-rotatably connected to the stem rotating means (7), for indicating the rotational position of the stem (3), the housing (5) having an opening (9) allowing reading of the rotational position of the indicating member (8),
and a cam member (10), which is mounted on the stem rotating means (7) and intended to operate the switch (4),
**characterised in**
**that** the cam member (10) is arranged on the stem rotating means (7) such that it is accessible via said opening (9), when the indicating member (8) is in a cam access position, for manual setting in an desired angle position.

2. Actuator device according claim 1, in which the indicating member (8) is axially removed from the opening (9) when it is in its cam access position.

3. Actuator device according to claim 2, wherein the stem rotating means (7) comprises a first part (11), coupled to the motor (6), and a second part (12), intended to be mounted to the valve stem (3), wherein the first and the second parts (11, 12) are non-rotatably connected to each other by means of the indicating member (8) when it is in its mounted position, and wherein the first and the second parts (11, 12) are rotatable in relation to each other when the indicating member (8) is in its cam access position.

4. Actuator device according to claim 3, wherein the indicating member (8) has an disconnected position, in which the first and the second parts (11, 12) are rotatable in relation to each other and the second part (12) is non-rotatably connected to the indicating member (8).

5. Actuator device according to claim 4, wherein the valve stem (3) is manually rotatable by means of the indicating member (8) when it is in its disconnected position, in which it is disconnected from the first part (11) of the stem rotating means (7) and connected to the second part (12) of the stem rotating means (7).

6. Actuator device according to claims 3-5, wherein the cam member (10) is arranged on the second part (12).

7. Actuator device according to claim 6, wherein the cam member is a ring (10a), frictionally fitted on the second part (12) and provided with a cam (10b).

8. Actuator device according to claim 6 or 7, wherein the second part (12) of the stem rotating means (7) has a top plate (12c) which is accessible via the opening (9) when the indicating member (8) is in its cam access position and which has a slot (12d) through which a setting pin (10c) on the cam member (10) is extending and wherein the cam member (10) is rotatable in relation to the second part (12) by means of the setting pin (10c).
